Europäisches Patentamt

European Patent Office

Office européen des brevets

(19)

(11) **EP 1 425 428 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **02781087.8**

(22) Anmeldetag: **14.09.2002**

(51) Int Cl.⁷: $C22B\ 23/00$, $C22B\ 1/06$

(86) Internationale Anmeldenummer:
**PCT/DE2002/003394**

(87) Internationale Veröffentlichungsnummer:
**WO 2003/025234 (27.03.2003 Gazette 2003/13)**

(54) **VERFAHREN ZUR GEWINNUNG VON COBALT UND NICKEL AUS ERZEN UND ERZKONZENTRATEN**

METHOD FOR OBTAINING COBALT AND NICKEL FROM ORES AND ORE CONCENTRATES

PROCEDE POUR EXTRAIRE DU COBALT ET DU NICKEL CONTENUS DANS DES MINERAIS ET DES CONCENTRES DE MINERAIS

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **14.09.2001 DE 10145419**
**12.01.2002 EP 02000758**

(43) Veröffentlichungstag der Anmeldung:
**09.06.2004 Patentblatt 2004/24**

(73) Patentinhaber: **Beckmann, Alexander**
**46487 Wesel (DE)**

(72) Erfinder: **Beckmann, Alexander**
**46487 Wesel (DE)**

(74) Vertreter: **Schreiber, Christoph, Dr. et al Patentanwälte von Kreisler Selting Werner, Postfach 10 22 41**
**50462 Köln (DE)**

(56) Entgegenhaltungen:
**EP-A- 0 041 841          DE-C- 4 329 417**
**US-A- 3 451 804          US-A- 4 110 106**
**US-A- 4 328 192          US-A- 4 585 477**
**US-A- 4 888 207          US-A- 5 626 648**

• **DATABASE WPI Section Ch, Week 199701 Derwent Publications Ltd., London, GB; Class M25, AN 1997-000006 XP002201989 & AU 17751 95 A (COMMONWEALTH SCI & IND RES ORG), 7. November 1996 (1996-11-07)**

**Beschreibung**

Die Erfindung betrifft ein Verfahren zur Gewinnung von Cobalt und Nickel aus arsenosulfidischen oder sulfidischen Erzen oder Erzkonzentraten.

Der weitaus größte Teil der weltweiten Nickel- und Cobaltproduktion wird aus arsenosulfidischen oder sulfidischen Mineralen gewonnen. Dabei treten Cobalt und Nickel häufig zusammen sowie vergesellschaftet mit weiteren Metallerzen auf.

Unter den cobalthaltigen Arsenosulfiden sind vor allem zu nennen Safflorit ($CoAs_2$), Skutterudit ($CoAs_3$), Arsenopyrit ((Fe,Co,Ni)AsS), und Cobaltin (CoAsS). Bei den Sulfiden ist vor allem Linneit ($Co_3S_4$) zu nennen.

Unter den Arsenosulfiden sind vor allem zu nennen Rammelsbergit $NiAs_2$, Arsenopyrit (FeAsS), Gersdorffit (NiAsS) und Nickelin (NiAs). Bei den Sulfiden ist vor allem Pentlandit $(Fe,Ni)_9S_8$, Millerit (NiS) und Bravoit $(Ni,Fe)S_2$ zu nennen.

Der Cobaltin ist unter den Cobaltmineralen, der Pentlandit unter den Nickelmineralen das am stärksten verbreitete Mineral. Diese besitzen daher die größte wissenschaftliche und wirtschaftliche Bedeutung bei der Entwicklung neuer Gewinnungsverfahren.

Beide Mineralien zeichnen sich außerdem dadurch aus, dass in ihnen regelmäßig ein Gehalt an Gold, Platinmetallen und anderen seltenen Metallen sowie seltenen Erden angelagert oder gelöst ist.

Die arsenosulfidischen und/oder sulfidischen Cobaltminerale werden aus Erzgenesen gewonnen, die in der Regel gemahlen und im Flotationsverfahren zu einem Erzkonzentrat aufkonzentriert werden, wobei insbesondere ein wesentlicher Teil der im Mahlgut enthaltenen Silikate abgetrennt werden.

Die Aufarbeitung der Erze oder Erzkonzentrate erfolgt klassischerweise durch Rösten der Erze, wobei das Sulfid bei hohen Temperaturen zu $SO_2$ oxidiert wird und Metalloxide zurückbleiben. Die so erhaltenen Erze können dann durch Zugabe von Kohlenstoff reduziert werden und die einzelnen Metalle werden durch spezielle Verfahren gegebenenfalls weiter aufgereinigt.

Mittlerweile gibt es neben den bekannten pyrometallurgischen und hydrometallurgischen Verfahren verschiedene Ansätze, Cobalt, Nickel und andere in den arsenosulfidischen und/oder sulfidischen Cobaltmineralen zu lösen.

Der Begriff "Laugung" umfasst sowohl chemische Laugung durch $Fe^{III}$ als auch die biologische Laugung (Bio-Leaching) durch Mikroorganismen, die den Schwefel als Energiequelle nutzen können. Insbesondere bei der Verwendung von eisenhaltigen Kupfer- und Nickelerzen ist eine Laugung bisher nur unvollständig möglich.

Der Erfindung liegt die Aufgabe zugrunde, ein verbessertes Verfahren zur Gewinnung von Cobalt und Nickel und anderen Metallen aus arsenosulfidischen und/oder sulfidischen Erzen oder Erzkonzentration zur Verfügung zu stellen.

Diese Aufgabe wird mit einem Verfahren gelöst, bei dem

- das arsenosulfische und/oder sulfidische Cobalt- und/oder Nickelerz oder - erzkonzentrat mit Schwefel oder schwefelhaltigen Arsenverbindungen zu einem Reaktionsprodukt umgesetzt wird, und
- lösliche Metalle' und seltene Erden aus dem Reaktionsprodukt gelöst werden.

Diese Umsetzung wird durch die Formel

$$4CoAsS + 4S \rightarrow 4CoS + As_4S_4 \tag{1}$$

$$(Fe,Ni)_9S_8 + 5S \rightarrow 4NiS + 5\,FeS_2 \tag{2}$$

$$4CoAs + 4\,As_2S_3 \rightarrow 4\,CoS + 3\,As_4S_4 \tag{3}$$

dargestellt.

Es hat sich gezeigt, dass sich der Cobaltin bei geeigneter Prozessführung nahezu vollständig in CoS und Reaigar umsetzen lässt. Pentlandit lässt sich bei der Prozessführung hingegen nahezu vollständig in NiS und Pyrit umsetzen.

Bei dieser Umsetzung entsteht aus einem Cobaltinkorn des Mahlgutes ein Korn überwiegend mit einem Kern aus Realgar und einem Mantel aus CoS. Im Gegensatz zu Cobaltin lässt sich aus Cobaltsulfid Cobalt sowie übrige darin angereicherte Metalle problemlos mit herkömmlichen Oxidationsverfahren herauslösen. Im Falle des Nickels entsteht ebenfalls aus einem Pentlanditkorn des Mahlguts ein Korn mit einem Kern aus Pyrit und einem Mantel aus NIS. Dieses lässt sich problemlos durch herkömmliche Laugungsverfahren herauslösen. Besonders geeignet ist der Schwefel in einem flüssigen Aggregatzustand. Je nach Temperatur ist der Schwefel leichtflüssig gelb bis zähflüssig dunkelrot/braun. In der flüssigen Phase treten Umwandlungen zwischen λ-, π- und μ-Schwefel ein. Die unterschiedlichen Formen führen zu einer Absenkung des Erstarrungspunktes. Flüssig ist Schwefel daher im Allgemeinen im Bereich von 111-444 °C, wobei der Siedepunkt abhängig ist vom Druck. Dieser Temperaturbereich wird daher bevorzugt verwendet, wobei weniger vorteilhaft der Bereich um 187 °C ist, da der Schwefel dort eine besonders hohe Viskosität hat, die bei höheren Temperaturen wieder abnimmt. Bevorzugt sind zum einen Temperaturbereiche von 111-159 °C, alternativ 350-444 °C. Niedrige Temperaturen sind selbstverständlich vom notwendigen Energieeintrag her günstiger, höhere Temperaturen beschleunigen die Reaktion.

Diese Reaktionen sind exotherm, so dass ein vergleichsweise geringer Energieaufwand für die Umsetzung nötig ist.

Ein mögliches Verfahren zur Gewinnung von Cobalt bzw. Nickel aus CoS bzw NiS wird mit den Formeln

$$CoS + Fe_2(SO_4)_3 \rightarrow CoSO_4 + 2FeSO_4 + S \qquad (4)$$

$$NiS + Fe_2(SO4)_3 \rightarrow NiSO_4 + 2\ FeSO_4 + S \qquad (5)$$

beschrieben. Das erzeugte Cobalt- bzw. Nickelsulfat ist ebenso wie das Eisensulfat säurelöslich, Cobalt, Nickel und Eisen gehen somit nacheinander in Lösung und können bei geeigneter Prozessführung separiert und abgetrennt werden.

Übrig bleibt ein im Mahlgut enthaltenes Gemisch aus Edel- und sonstigen Metallen und seltenen Erden, insbesondere aus Gold, Silber, Platin, PME's und Zink, das sich als Residuum am Boden des Tanks, in dem der Lösungsprozess abläuft, absetzt.

Mit neuartigen Bioleaching-Verfahren kann das Cobalt oder Nickel besonders umweltfreundlich unter vergleichsweise geringer Erzeugung von Schwefelsäure herausgelöst werden. Dabei wird das Cobaltsulfid gemäß

$$CoS + O_2 \rightarrow CoSO_4 \qquad (6)$$

bzw.

$$NiS + O_2 \rightarrow NiSO_4 \qquad (7)$$

bei Anwesenheit spezieller Bakterien oxidiert und in wässriger Lösung abgetrennt und elektrolysiert.

Die Umsetzung der Erze oder Erzkonzentrate sollte bevorzugt in einer inerten Atmosphäre ablaufen, beispielsweise unter Stickstoff oder Argon.

Als bevorzugter Temperaturbereich für die Umsetzung hat sich der Bereich zwischen 50°C und 550°C -herausgestellt, insbesondere zwischen 350°C und 450°C kann die Umsetzung vergleichsweise schnell erfolgen. Die Dauer der Umsetzung hängt von der Größe der Mahlkörner und der Temperatur ab und kann vom Fachmann durch einfache Versuche optimiert werden.

Der Umsetzungsprozess der Erze oder Erzkonzentrate kann durch eine Mikrowellenbestrahlung unterstützt werden. Da durch die Mikrowellen die einzelnen Körner des Mahlgutes gleichermaßen Innen wie Außen aufgeheizt werden, können hierdurch die bei der Umsetzung ablaufenden Diffusionsprozesse beschleunigt werden. Durch diese Verbesserung der Reaktionskinetik kann der Prozess beschleunigt werden.

Je nach Umsetzungstemperatur und gegebenenfalls Intensität der Mikrowellenbestrahlung kann die Umsetzung während einer Dauer von 0,5 h bis 10 h, insbesondere von 2 h bis 5 h erfolgen.

Der Schwefel sollte dem Cobaltin stöchiometrisch zugeführt werden. Dies bedeutet, dass im Regelfall vor der Umsetzung eine Analyse durchgeführt werden sollte, um festzustellen, welche Mengen an Schwefel benötigt werden, um in Abhängigkeit vom eingesetzten Erz zur Umsetzung gemäß Formel (1), (2), (3) oder vergleichbaren Umsetzungen zu gelangen. Ein Überschuss an Schwefel sollte vermieden werden, da dieser beim Abkühlen meist eine klebrige Masse ergibt. Stöchiometrisch bedeutet also in diesem Fall, dass bezogen auf den Metallgehalt der Erze oder Erzkonzentrat nach Ablauf der Reaktion praktisch kein freier Schwefel verbleiben sollte.

Dabei kann der Schwefel dem Mahlgut in festem Zustand zugeführt werden, wobei die Umsetzung des Erzes oder Erzkonzentrates bei Umgebungsdruck erfolgen sollte, jedoch auch mit einem Überdruck von bis zu 10 bar durchgeführt werden kann. Um zu vermeiden, dass bei den Temperaturen für die Umsetzung zu viel Schwefel verdampft, kann es von Vorteil sein, wenn die Umsetzung in einer Schwefeldampf gesättigten Atmosphäre abläuft.

Andererseits kann die Umsetzung auch ohne Zugabe festen Schwefels in einer gasförmigen Schwefel enthaltenden Atmosphäre bei Unterdruck erfolgen.

Auch ist die Umsetzung unter Zugabe eines Schwefelplasmas möglich.

Möglich ist auch die Umsetzung von flüssigem Schwefel mit entsprechend vorgewärmtem Erz oder Erzkonzentrat, da dies die Reaktion stark beschleunigt und die Bildung von Nebenprodukten verringert.

Das Verfahren kann z. B. in einem Dreikammer-Tunnelofen realisiert werden. Der Dreikammer-Tunnelofen weist eine erste und eine dritte Kammer auf, die als Schleusen für die zweite Kammer dienen. Die zweite Kammer des Ofens ist mit elektrischen Heizwendeln versehen und weist einen Einlass für Stickstoff bzw. Argon auf, das als Spülgas verwendet wird. Darüber hinaus kann die zweite Kammer mit Quarzglasfenstern zum Einbringen von Mikrowellen versehen sein.

Versuche haben gezeigt, dass die Umsetzung insbesondere bei einer Bestrahlung des Gemisches aus Mahlgut und Schwefel mit Mikrowellen mit einer auf die Menge des Mahlguts bezogenen spezifischen Energiedichte von 8-35 kWh/t optimiert ist. Es können sowohl Mikrowellen mit 815 MHz als auch mit 2,45 GHz verwendet werden.

Auch kann die Umsetzung in einem Wirbelschichtreaktor erfolgen.

Überraschenderweise werden durch das erfindungsgemäße Verfahren rieselfähige Produkte erhalten, d.h. der zugesetzte Schwefel führt nicht zu einer Verklebung der Reaktionsprodukte, sondern wird für die Umsetzung benötigt. Eventuell vorhandene Verklebungen lassen sich leicht aufbrechen. Das Produkt weist durch die entstandene Porosität, auch bedingt durch die exotherme Reaktion, eine mindestens 50-fache Oberflächenvergrößerung auf, bezogen auf das Ausgangsmaterial. Dies erlaubt einen erheblich besseren Angriff von biologischen und/oder chemischen Laugungsmitteln.

**Patentansprüche**

1. Verfahren zur Gewinnung von Metallen aus einem arsenosulfidischen und/oder sulfidischen Cobalt- und/oder Nikkelerz oder -erzkonzentrat, bei dem

   - das arsenosulfische und/oder sulfidische Cobalt- und/oder Nickelerz oder - erzkonzentrat mit Schwefel oder schwefelhaltigen Arsenverbindungen zu einem Reaktionsprodukt enthaltend CoS und/oder NiS umgesetzt wird, und
   - lösliche Metalle und seltene Erden aus dem Reaktionsprodukt gelöst werden.

2. Verfahren nach Anspruch 1, **dadurch gekennzeichnet, dass** Arsen aus dem Reaktionsprodukt gelöst wird und die am Reaktionsprodukt angelagerten Metalle und seltene Erden, insbesondere Gold, Silber, Platin, PME, Nickel, Cobalt und Zink abgetrennt werden.

3. Verfahren nach Anspruch 1 oder 2, **dadurch gekennzeichnet, dass** die Metalle mit einem Bioleaching-Verfahren aus dem Reaktionsprodukt herausgelöst werden.

4. Verfahren nach einem der vorstehenden Ansprüche, **dadurch gekennzeichnet, dass** die Umsetzung- in inerter Atmosphäre durchgeführt wird.

5. Verfahren nach einem der vorstehenden Ansprüche, **dadurch gekennzeichnet, dass** die Umsetzung bei einer Temperatur zwischen 50°C und 550°C, insbesondere zwischen 350°C und 450°C erfolgt.

6. Verfahren nach einem der vorstehenden Ansprüche, **dadurch gekennzeichnet, dass** die Umsetzung durch Mikrowellenbestrahlung unterstützt wird.

7. Verfahren nach einem der vorstehenden Ansprüche, **dadurch gekennzeichnet, dass** die Umsetzung während einer Dauer von 0,5 bis 10 h, insbesondere von 2 h bis 5 h erfolgt.

8. Verfahren nach einem der vorstehenden Ansprüche, **dadurch gekennzeichnet, dass** der Schwefel zugeführt wird.

9. Verfahren nach einem der vorstehenden Ansprüche, **dadurch gekennzeichnet, dass** der Schwefel in festem Zustand zugeführt wird und die Umsetzung bei einem Druck von 1 bis 10 bar durchgeführt wird.

**10.** Verfahren nach Anspruch 8, **dadurch gekennzeichnet, dass** die Umsetzung in einer mit Schwefeldampf gesättigten Atmosphäre abläuft.

**11.** Verfahren nach einem der Ansprüche 1 bis 7, **dadurch gekennzeichnet, dass** Schwefel in gasförmigen Zustand zugeführt wird und die Umsetzung bei einem Unterdruck erfolgt.

**12.** Verfahren nach einem der Ansprüche 1 bis 7, **dadurch gekennzeichnet, dass** die Umsetzung mit einem Schwefelplasma erfolgt.

## Claims

**1.** A process for extracting metals from an arsenosulfidic and/or sulfidic cobalt and/or nickel ore or ore concentrate in which

- the arsenosulfidic and/or sulfidic cobalt and/or nickel ore or ore concentrate is converted to a reaction product containing $CoS$ and/or $NiS$ by sulfur or sulfur-containing arsenic compounds; and

- soluble metals and rare earth metals are leached from the reaction product.

**2.** The process according to claim 1, **characterized in that** arsenic is leached from the reaction product and that the metals and rare earth metals deposited on the reaction product, especially gold, silver, platinum, platinum metals, nickel, cobalt and zinc, are separated off.

**3.** The process according to claim 1 or 2, **characterized in that** the metals are leached out from the reaction product using a bioleaching process.

**4.** The process according to any of the preceding claims, **characterized in that** said conversion is performed in an inert atmosphere.

**5.** The process according to any of the preceding claims, **characterized in that** said conversion is performed at a temperature of between 50 °C and 550 °C, especially between 350 °C and 450°C.

**6.** The process according to any of the preceding claims, **characterized in that** said conversion is promoted by microwave irradiation.

**7.** The process according to any of the preceding claims, **characterized in that** said conversion is effected for a period of from 0.5 h to 10 h, especially from 2 h to 5 h.

**8.** The process according to any of the preceding claims, **characterized in that** sulfur is added.

**9.** The process according to any of the preceding claims, **characterized in that** sulfur is added in a solid state and the conversion is effected under a pressure of from 1 to 10 bar.

**10.** The process according to claim 8, **characterized in that** said conversion proceeds in an atmosphere saturated with sulfur vapor.

**11.** The process according to any of claims 1 to 7, **characterized in that** sulfur is added in a gaseous state and the conversion is effected under reduced pressure.

**12.** The process according to any of claims 1 to 7, **characterized in that** the conversion is effected with a sulfur plasma.

## Revendications

**1.** Procédé d'obtention de métaux à partir d'un minerai ou d'un concentré de minerai de cobalt et/ou de nickel arsénosulfuré et/ou sulfuré, dans lequel

- on fait réagir le minerai ou le concentré de minerai de cobalt et/ou de nickel arsénosulfuré et/ou sulfuré avec du soufre ou des composés d'arsenic soufrés pour obtenir un produit de réaction contenant du CoS et/ou du NiS, et
- on sépare les métaux et les terres rares solubles du produit de réaction.

2. Procédé selon la revendication 1, **caractérisé en ce qu'**on sépare l'arsenic du produit de réaction et qu'on sépare les métaux et les terres rares fixés au produit de réaction, notamment l'or, l'argent, le platine, le PME, le nickel, le cobalt et le zinc.

3. Procédé selon la revendication 1 ou 2, **caractérisé en ce qu'**on extrait les métaux du produit de réaction par un procédé de bio-lixiviation (Bioleaching).

4. Procédé selon une des revendications précédentes, **caractérisé en ce qu'**on met en oeuvre la réaction sous une atmosphère inerte.

5. Procédé selon une des revendications précédentes, **caractérisé en ce qu'**on met en oeuvre la réaction à une température comprise entre 50°C et 550°C, notamment entre 350°C et 450°C.

6. Procédé selon une des revendications précédentes, **caractérisé en ce qu'**on assiste la réaction par une exposition à des micro-ondes.

7. Procédé selon une des revendications précédentes, **caractérisé en qu'**on met en oeuvre la réaction pendant une durée de 0,5 à 10 h, notamment de 2 à 5 h.

8. Procédé selon une des revendications précédentes, **caractérisé en ce qu'**on introduit du soufre.

9. Procédé selon une des revendications précédentes, **caractérisé en ce qu'**on introduit le soufre sous une forme solide et qu'on met en oeuvre la réaction sous une pression de 1 à 10 bars.

10. Procédé selon la revendication 8, **caractérisé en ce qu'**on met en oeuvre la réaction dans une atmosphère saturée en vapeur de soufre.

11. Procédé selon une des revendications 1 à 7, **caractérisé en ce qu'**on introduit le soufre sous une forme gazeuse et qu'on met en oeuvre la réaction sous une dépression.

12. Procédé selon une des revendications 1 à 7, **caractérisé en qu'**on met en oeuvre la réaction avec un plasma de soufre.